# EUROPÄISCHE PATENTSCHRIFT

(11) **EP 1 324 900 B1**
(45) Veröffentlichungstag und Bekanntmachung des Hinweises auf die Patenterteilung: **27.09.2006**
(21) Anmeldenummer: 02774446.5
(22) Anmeldetag: 10.10.2002
(51) Int. Cl.: B60R 21/20

(54) **GEHÄUSE FÜR EINEN AUFBLASBAREN GASSACK EINES KRAFTFAHRZEUGES**
HOUSING FOR MOTOR VEHICLE AIRBAG
BOITIER DESTINE A UN COUSSIN GONFLABLE D'UN VEHICULE AUTOMOBILE

(30) Priorität: 12.10.2001 DE 10150275
(43) Veröffentlichungstag der Anmeldung: 09.07.2003
(73) Patentinhaber: ZF Lemförder Metallwaren AG, 49441 Lemförde (DE)
(72) Erfinder: FANGMANN, Thomas, 49413 Dinklage (DE); WAGENER, Keit, 49143 Bissendorf (DE)
(86) Internationale Anmeldenummer: PCT/DE2002/003810
(87) Internationale Veröffentlichungsnummer: WO 2003/033311

(56) Entgegenhaltungen:
- DE-A- 19 504 575
- DE-A- 19 703 767
- US-A- 5 354 093
- US-A- 5 496 065
- US-A- 5 791 682

## Beschreibung

Die Erfindung betrifft ein Gehäuse für einen aufblasbaren Gassack eines Kraftfahrzeuges nach dem Oberbegriff des Patentanspruches 1.

Ein ähnliches Gehäuse, wie es beispielsweise aus der DE 197 03 767 A1 bekannt ist, weist einen Gasgenerator, einen Aufnahmeraum zur Einlage des gefalteten Gassackes sowie einen integral mit dem Gehäuse ausgebildeten Diffusor zur gleichmäßigen Verteilung des durch den gezündeten Gasgenerator freigesetzten Gases auf. Der Gasgenerator ist unmittelbar in den Diffusor eingesetzt.
In Folge der wachsenden Sicherheitsanforderungen an Kraftfahrzeuge werden vermehrt auch aufblasbare Gassäcke oder Airbags, die bei einem Unfall schwere Verletzungen der im Fahrzeug befindlichen Personen vermeiden sollen, in unterschiedlichsten Ausführungen eingesetzt. Längst sind aufblasbare Gassäcke nicht mehr nur in Fahrzeugen der Oberklasse zu finden. Vielmehr werden sie auch in Fahrzeuge der unteren Preiskategorien vorgesehen. Damit wächst jedoch auch das Bedürfnis, die Gehäuse kostengünstig herstellen zu können. Einhergehend damit ist die Forderung nach einer Reduzierung der Bauteile sowie des erforderlichen Montageaufwandes sowohl bei der Herstellung des Gehäuses selbst, als auch beim Einbau desselben in das Kraftfahrzeug.
Den Gasgenerator unmittelbar in eine integral mit dem Gehäuse für einen aufblasbaren Gassack ausgeführten Diffusor einzusetzen, ist ebenfalls aus der

DE 197 03 767 A bekannt. Gemäß der in dieser Druckschrift vorgestellten Lösung wird der Gasgenerator jedoch an einer Seite mit dem Gehäuse verschraubt oder am Gehäuse mittels einer Schnappverbindung gehalten. Auf der gegenüberliegenden Seite der Verschraubung weist der Gasgenerator einen Dichtungsbereich auf. Die Montageaufwendungen, die durch die erforderliche Verschraubung des Gasgenerators mit dem diesen aufnehmenden Gehäuse erforderlich werden sowie die notwendigen Bauteile und Vorkehrungen am Gehäuse sind recht aufwendig und damit unwirtschaftlich.

Des Weiteren offenbart die gattungsbildende EP 0 620 140 A1 ein Gehäuse für einen aufblasbaren Gassack eines Kraftfahrzeuges mit einem Gasgenerator, einem Aufnahmeraum zur Einlage des gefalteten Gassackes und einem integral mit dem Gehäuse ausgebildeten Diffusor zur gleichmäßigen Verteilung des durch den gezündeten Gasgenerator freigesetzten Gases. Der Gasgenerator ist hierzu in den Diffusor eingesetzt und kann zu seiner Festsetzung in dem Diffusor eine formschlüssige Verbindung mit der Diffusorkammerinnenwand aufweisen. Zur Befestigung des Gehäuses für den aufblasbaren Gassack an einem Kraftfahrzeugbauteil sind zusätzliche Montagebauteile notwendig, wodurch die Montage aufwendig und damit unwirtschaftlich wird.

Der Erfindung liegt die technische Aufgabenstellung zu Grunde, ein Gehäuse für einen aufblasbaren Gassack bereit zu stellen, das wirtschaftlich herstellbar und montierbar ist und dessen Zusammenbau sich gegenüber bekannten Lösungen vereinfacht.

Diese technische Aufgabenstellung wird durch die Merkmale des Patentanspruches 1 gelöst.
Weitere Ausgestaltungen dieser Erfindung finden Niederschlag in den Unteransprüchen.

Demgemäß wird erfindungsgemäß vorgeschlagen, dass der Gasgenerator zu seiner Festsetzung in dem Diffusor eine formschlüssige und/oder kraftschlüssige Verbindung mit der Diffusorkammerinnenwand aufweist. Durch eine derartige Ausführung wird der Gasgenerator zumindest von einem Teil der Diffusorkammerinnenwand eng und festsitzend umschlossen, da diese vorzugsweise eine zu der Außenkontur des Gasgenerators komplementäre Innenkontur aufweisen sollte, sodass die Innenkontur dem Gasgenerator im Wesentlichen folgt. Der Gasgenerator ist der vorgeschlagenen Lösung entsprechend in dem Diffusor des Gehäuses aufgenommen. Eine Halterung des Gasgenerators ist somit ohne zusätzliche Hilfsmittel möglich. Der Zusammenbau des Gehäuses vereinfacht sich damit in erheblichem Maße, weil beispielsweise keine Verschraubungen des Gasgenerators mit dem Gehäuse mehr notwendig sind. Darüber hinaus können beispielsweise auch Schnappverbindungen oder ähnliche Lösungen zum Einsatz kommen, um den Gasgenerator in dem Diffusor zu arretieren.
Durch die großflächige Anlage der Außenkontur des Gasgenerators an der Innenkontur der Diffusorkammer kann die Befestigung des Gasgenerators ebenso überwiegend über einen Reibschluss ermöglicht werden.

Um einen wirtschaftlichen Einbau des Gehäuses für einen aufblasbaren Gassack nach der vorgestellten Erfindung in das Kraftfahrzeug zu ermöglichen, ist erfindungsgemäß vorgesehen, das Gehäuse auf seiner der Gasaustrittsseite gegenüberliegenden Unterseite mit Befestigungshaken zu versehen, die in korrespondierende Ausnehmungen eines Kraftfahrzeugbauteiles einschnappbar sind. Durch die zuvor genannten Maßnahmen kann einerseits das Gehäuse zur Aufnahme eines aufblasbaren Gassackes in kürzester Zeit zusammengebaut werden und es ist darüber hinaus ebenso einfach möglich, das derart fertiggestellte Gehäuse in ein Kraftfahrzeug einzusetzen, so dass durch die vorliegende Erfindung insgesamt eine sehr wirtschaftliche Lösung bereit gestellt werden kann.

Um die beim Auslösen des Gasgenerators auftretenden Explosionskräfte aufzufangen, wird gemäß der Erfindung vorgeschlagen, den Gasgenerator auf seiner der Gasaustrittsseite gegenüberliegenden Unterseite mit Anlageflächen auszustatten, die nur im Falle der Auslösung unmittelbar mit dem darunter befindlichen Kraftfahrzeugbauteil in Kontakt treten und sich somit gegen dieses Kraftfahrzeugbauteil abstützen. Im nicht ausgelösten Zustand des Gasgenerators kann ein geringfügiger Abstand zwischen der Unterseite des Gasgenerators und dem nächstgelegenen Kraftfahrzeugbauteil vorhanden sein. Dies führt zudem zu dem positiven Effekt, dass Klappergeräusche während des Fahrbetriebes nicht auftreten können.

Gemäß einer Ausgestaltung der erfinderischen Lösung kann der Festsitz des Gasgenerators innerhalb des Diffusors durch eine Presspassung zwischen dem Gasgenerator und der Diffusorkammerinnenwand erreicht werden. Hierzu wird der Gasgenerator während des Gehäusezusammenbaus unmittelbar in die Diffusorkammer eingepresst. Die Diffusorkammer kann hierzu beispielsweise leicht konisch ausgeführt sein.

Eine vorteilhafte Weiterbildung mit einer zusätzlichen Steigerung der Halterungskraft des Gasgenerators innerhalb der Diffusorkammer kann auch dadurch erreicht werden, dass die formschlüssige Verbindung zwischen Gasgenerator und Diffusorkammerinnenwand mittels eines nach Einsetzen des Gasgenerators in die Diffusorkammer umgeformten Randflansches hergestellt wird. Dieser Randflansch kann durch an sich bekannte Umformverfahren an die Außenoberfläche des Gasgenerators angelegt werden. Gedacht ist hier beispielsweise für Kunststoffgehäuse an Ultraschall-Umform- oder -Schweißverfahren beziehungsweise an Orbital-Umform- oder -Schweißverfahren oder andere thermische Behandlungen. Bei metallischen Gehäusen oder bei Verwendung von Kunststoff-Metall-Hybridwerkstoffen könnte auch an eine Abkantung gedacht werden, so dass der Randflansch den Gasgenerator in der Diffusorkammer festsetzt.

Gemäß einem weiteren Vorschlag zur Verbesserung bekannter Gehäuse für aufblasbare Gassäcke wird darüber hinaus angeregt, den Diffusor in Gasaustrittsrichtung mit einer Diffusorkappe auszustatten. Diese weist mehrere Ausströmöffnungen für eine optimierte Freisetzung des durch den Gasgenerator erzeugten Gases auf, um somit eine gleichmäßige Öffnung und ein konstantes

Aufblasen des Gassackes zu gewährleisten. Demgemäß sollten die Ausströmöffnungen in gleichmäßigen Abständen über die Diffusorkappe verteilt angeordnet werden. Als Diffusorkappe wird im Sinne der Erfindung der in Gasaustrittsrichtung obere Teil des Diffusors verstanden.

Der gefaltete und über den Diffusor gestülpte Gassack kann ferner mittels Halterungsgliedern in dem den Gassack aufnehmenden Aufnahmeraum befestigt werden. Diese Halterungsglieder sind gemäß einer Ausgestaltung der Erfindung als Klemmhaken ausführbar. Da die Gassäcke zum Einbau in die Gehäuse über einen Flanschbereich verfügen, ist es in einfacher Weise möglich, diesen Anschlussflansch mit entsprechenden komplementären Öffnungen zum Einschnappen der Klemmhaken auszustatten.

Zur Montageerleichterung des Gassackes wird darüber hinaus vorgeschlagen, das Gehäuse auf seiner der Gasaustrittsseite gegenüberliegenden Unterseite mit Montageöffnungen auszustatten. Diese Montageöffnungen können beispielsweise dafür verwendet werden, Montagehaken in das Innere des Gehäuses einzuführen, mittels derer die Klemmhaken verformbar sind, so dass der Gassack mit seinem Anschlussflansch über die Klemmhaken geführt werden kann.

Das Kraftfahrzeugbauteil kann ein Lenkrad sein. Ebenso ist es natürlich auch möglich, das erfindungsgemäße Gehäuse als Beifahrerairbaggehäuse auszuführen, wobei das Kraftfahrzeugbauteil in diesem Falle das Armaturenbrett bzw. ein Träger im Frontbereich wäre.

Zum Toleranzausgleich sowie zur Vermeidung bzw. Reduzierung auftretender Schwingungen während des Fahrbetriebes ist es darüber hinaus sinnvoll, zwischen der Diffusorkammerinnenwand und dem Gasgenerator mindestens ein Ausgleichs- und/oder Dichtelement einzusetzen. Dieses Dichtelement kann im einfachsten Fall ein Gummiring sein, der beispielsweise lose einlegbar ist.

Um ein erfindungsgemäßes Gehäuse für einen aufblasbaren Gassack mit der erforderlichen Stabilität auszustatten, ist es darüber hinaus möglich, Verstärkungsrippen zur Versteifung vorzusehen und/oder das Gehäuse mehrwandig auszuführen. Dabei ist es im Zuge einer wirtschaftlichen Herstellbarkeit des Gehäuses vorteilhaft, dieses insgesamt einteilig beispielsweise aus einem Kunststoff oder einem Metall-Kunststoff-Hybridwerkstoff herzustellen. Somit sind nur wenige Arbeitsschritte erforderlich, um das erfindungsgemäße Gehäuse zu erzeugen, mit dem Gasgenerator zu verbinden und dieses anschließend in das Kraftfahrzeug zu integrieren.

Anhand der Zeichnungen sollen nachfolgend zwei bevorzugte Ausführungsformen eines erfindungsgemäßen Gehäuses für einen aufblasbaren Gassack näher beschrieben werden.
Es zeigen:
- Figur 1:: eine erste Ausführungsform eines Gehäuses für einen aufblasbaren Gassack im Schnitt und
- Figur 2:: eine zweite Ausführungsvariante eines Gehäuses für einen aufblasbaren Gassack im Schnitt.

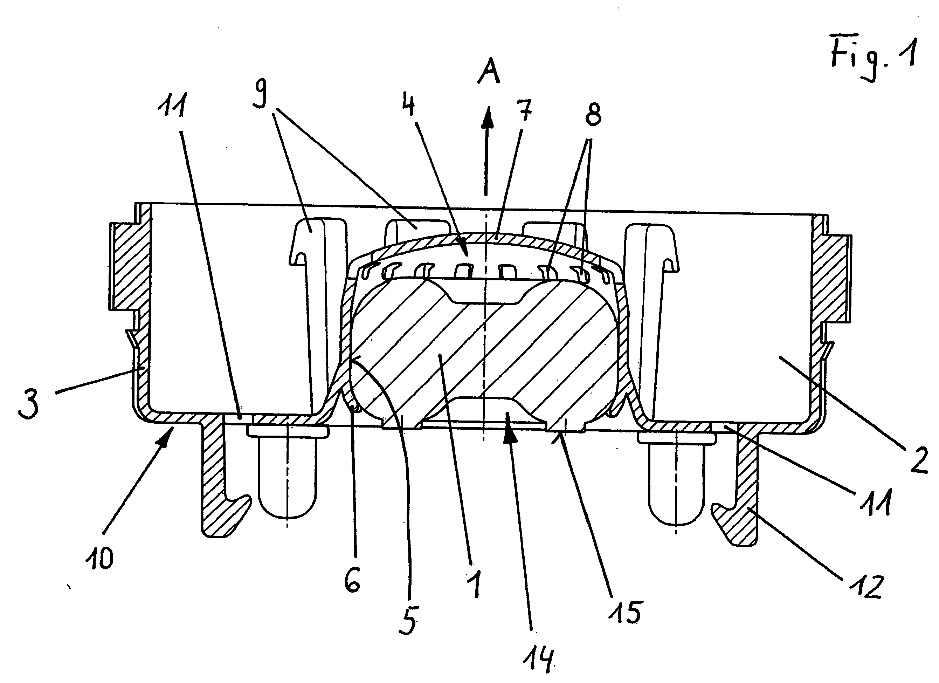

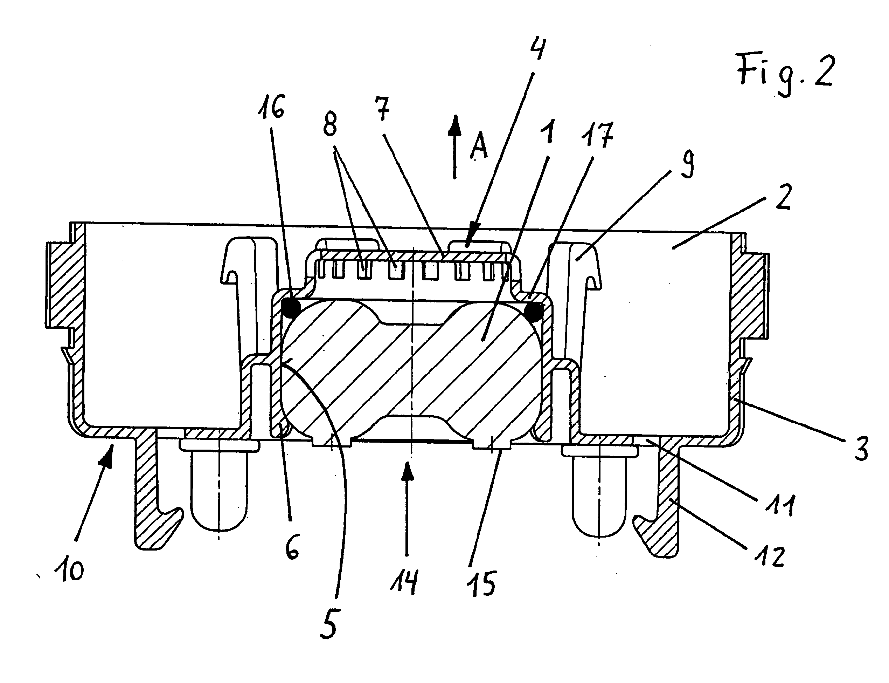

Die in den Figuren 1 und 2 gezeigten Gehäuse 3 für einen aufblasbaren Gassack sind vollständig aus Kunststoff hergestellt. Das Gehäuse 3 weist einen Aufnahmeraum 2 zur Einlage und Befestigung des gefalteten Gassackes auf. Der Gassack wurde aus Vereinfachungsgründen in den Zeichnungen nicht dargestellt. Im zentralen Bereich des Gehäuses 3 ist ein insgesamt mit 4 bezeichneter Diffusor angeordnet. In den Diffusor ist ein Gasgenerator 1 eingesetzt. Dieser liegt reibschlüssig fest an der Diffusorkammerinnenwand 5 an. In Gasaustrittsrichtung A, also in den Figuren oberhalb des Gasgenerators 1, weist der Diffusor 4 eine Diffusorkappe 7 auf. Diese Diffusorkappe 7 ist gleichmäßig über ihren Umfang verteilt mit Ausströmöffnungen 8 versehen. Durch die Ausströmöffnungen 8 wird das vom Gasgenerator 1 im Auslösefall erzeugte Gas gleichmäßig in den Gassack abgegeben, so dass dieser ebenso gleichmäßig aufblasbar ist. Der Gasgenerator 1 ist bei den in den Figuren 1 und 2 gezeigten Ausführungsvarianten eines erfindungsgemäßen Gehäuses 3 sowohl über einen Presssitz mit der Diffusorkammerinnenwand 5 verbunden als auch mittels eines nach Einsetzen des Gasgenerators 1 in die Diffusorkammerwand umgeformten Randflansches 6 gehalten. Der umgeformte Randflansch 6 kann jedoch ebenso als Schnappverbindung gestaltet sein. Somit kann ein sicherer Festsitz des Gasgenerators 1 in dem Diffusor 4 gewährleistet werden.
Auf der der Gasaustrittsseite A des Gasgenerators 1 gegenüberliegenden Unterseite 14 des Gasgenerators 1 weist dieser Anlageflächen 15 auf, welche im Normalzustand geringfügig beabstandet zu einem in den Figuren aus Gründen der besseren Anschaulichkeit nicht gezeigten Kraftfahrzeugbauteil sind. In Folge der durch Auslösung des Gasgenerators 1 erzeugten Kraftwirkung wird dieser Abstand zu Null reduziert, so dass sich der Gasgenerator 1 über seine Anlageflächen 15 unmittelbar an dem Kraftfahrzeugbauteil abstützt.
Den in den Figuren 1 und 2 gezeigten Ausführungsvarianten eines Gehäuses 3 für einen aufblasbaren Gassack ist darüber hinaus gemein, dass sie auf der Innenseite des Gehäuses 3, d. h. im Aufnahmeraum 2, Halterungsglieder 9 in Form von Klemmhaken aufweisen, welche in korrespondierende Öffnungen eines am Gassack befestigten Montageflansches eingreifen, so dass über diese Halterungsglieder 9 der Gassack innerhalb des Aufnahmeraumes 2 des Gehäuses 3 befestigbar ist. Zur Erleichterung der Montage des Gassackes dienen Montageöffnungen 11 an der Unterseite 10 des Gehäuses 3.

Um eine Schnellbefestigung des Gehäuses 3 an dem Kraftfahrzeugbauteil zu ermöglichen, weist das Gehäuse auf seiner Unterseite 10 darüber hinaus Befestigungshaken 12 auf, die in korrespondierende Ausnehmungen des Kraftfahrzeugbauteiles einschnappbar sind. Somit kann der Aufgabenstellung Rechnung getragen werden, ein erfindungsgemäßes Gehäuse ohne großen Aufwand schnell und unkompliziert zu montieren bzw. dieses in dem Kraftfahrzeug einzubauen.

Die einen grundsätzlich gleichen Aufbau aufweisenden Gehäuse 3, wie sie in den Figuren 1 und 2 gezeigt sind, unterscheiden sich einerseits durch die Gestaltung der Diffusorkappe 7. Diese ist bei der Ausführung in Figur 1 sphärisch ausgeführt und weist bei der Variante gemäß Figur 2 eine ebene Oberfläche auf.
Darüber hinaus ist in dem Gehäuse 3, wie es aus der Figur 2 hervorgeht, ein Ausgleichs- bzw. Dichtelement 16 zwischen der Diffusorkammerinnenwand 5 und dem Gasgenerator 1 vorgesehen. Dieses Ausgleichs- bzw. Dichtelement 16 zwischen der Diffusorkammerinnenwand 5 und dem Gasgenerator 1 dient vorliegend als Toleranz-und Schwingungsausgleich. Zur Verbesserung der Anlage des Ausgleichs- bzw. Dichtelementes 16 ist der Diffusor 4 im Bereich des Ausgleichs- oder Dichtelementes 16 mit einem eingezogenen, flanschartigen Bereich 17 ausgestattet.

### Bezuizszeichenliste

- 1.: Gasgenerator
- 2.: Aufnahmeraum
- 3.: Gehäuse
- 4.: Diffusor
- 5.: Diffusorkammerinnenwand
- 6.: Randflansch
- 7.: Diffusorkappe
- 8.: Ausströmöffnung
- 9.: Halterungsglied
- 10.: Unterseite (Gehäuse)
- 11.: Montageöffnung
- 12.: Befestigungshaken
- 13.:
- 14.: Unterseite (Gasgenerator)
- 15.: Anlagefläche
- 16.: Ausgleichs- und/oder Dichtelement
- 17.: Flanschbereich

## Patentansprüche

1. Gehäuse für einen aufblasbaren Gassack eines Kraftfahrzeuges, mit einem Gasgenerator (1), einem Aufnahmeraum (2) zur Einlage des gefalteten Gassackes, einem integral mit dem Gehäuse (3) ausgebildeten Diffusor (4) zur gleichmäßigen Verteilung des durch den gezündeten Gasgenerator (1) freigesetzten Gases, wobei der Gasgenerator (1) in den Diffusor (4) eingesetzt ist und zu seiner Festsetzung in dem Diffusor (4) eine form- und/oder kraftschlüssige Verbindung mit der Diffusorkammerinnenwand (5) aufweist,
**dadurch gekennzeichnet, dass**
das Gehäuse (3) auf seiner der Gasaustrittsseite gegenüberliegenden Unterseite (10) Befestigungshaken (12) zur Verbindung mit einem Kraftfahrzeugbauteil aufweist und der Gasgenerator (1) auf seiner der Gasaustrittseite gegenüberliegenden Unterseite (14) Anlageflächen (15) zur unmittelbaren Kontaktierung mit einem sich darunter befindlichen Kraftfahrzeugbauteil bei Auslösung des Gasgenerators aufweist.

2. Gehäuse für einen aufblasbaren Gassack nach Anspruch 1,
**dadurch gekennzeichnet, dass**
die form- und/oder kraftschlüssige Verbindung zwischen Gasgenerator (1) und Diffusorkammerinnenwand (5) eine Presspassung ist.

3. Gehäuse für einen aufblasbaren Gassack nach Anspruch 1 oder 2,
**dadurch gekennzeichnet, dass**
die form- und/oder kraftschlüssige Verbindung zwischen Gasgenerator (1) und Diffusorkammerinnenwand (5) aus einem nach Einsetzen des Gasgenerators in die Diffusorkammer umgeformten Randflansch (6) besteht.

4. Gehäuse für einen aufblasbaren Gassack nach Anspruch 1 oder 2,
**dadurch gekennzeichnet, dass**
die form- und/oder kraftschlüssige Verbindung zwischen Gasgenerator (1) und Diffusorkammerinnenwand (5) aus einer Schnappverbindung besteht.

5. Gehäuse für einen aufblasbaren Gassack nach einem der vorstehend genannten Ansprüche,
**dadurch gekennzeichnet, dass**
der Diffusor (4) in Gasaustrittsrichtung (A) eine Diffusorkappe (7) mit Ausströmöffnungen (8) für das freigesetzte Gas aufweist.

6. Gehäuse für einen aufblasbaren Gassack nach Anspruch 5,
**dadurch gekennzeichnet, dass**
die Ausströmöffnungen (8) in gleichmäßigen Abständen über die Diffusorkappe (7) verteilt angeordnet sind.

7. Gehäuse für einen aufblasbaren Gassack nach einem der vorstehend genannten Ansprüche,
**dadurch gekennzeichnet, dass**
in dem Aufnahmeraum (2) zur Einlage des gefalteten Gassackes Halterungsglieder (9) zur Befestigung des Gassackes vorhanden sind.

8. Gehäuse für einen aufblasbaren Gassack nach Anspruch 7,
**dadurch gekennzeichnet, dass**
die Halterungsglieder (9) Klemmhaken sind.

9. Gehäuse für einen aufblasbaren Gassack nach einem der vorstehend genannten Ansprüche,
**dadurch gekennzeichnet, dass**
das Gehäuse (3) auf seiner der Gasaustrittsseite gegenüberliegenden Unterseite (10) Montageöffnungen (11) aufweist.

10. Gehäuse für einen aufblasbaren Gassack nach Anspruch 1,
**dadurch gekennzeichnet, dass**
das Kraftfahrzeugbauteil ein Lenkrad ist.

11. Gehäuse für einen aufblasbaren Gassack nach einem der vorstehend genannten Ansprüche,
**dadurch gekennzeichnet, dass**
zwischen dem Gasgenerator (1) und der Diffusorkammerinnenwand (5) ein Ausgleichs- und/oder Dichtelement (16) eingesetzt ist.

12. Gehäuse für einen aufblasbaren Gassack nach einem der vorstehend genannten Ansprüche,
**dadurch gekennzeichnet, dass**
der Diffusor (4) und / oder das Gehäuse (3) durch Verstärkungsrippen versteift ist.

13. Gehäuse für einen aufblasbaren Gassack nach einem der vorstehend genannten Ansprüche,
**dadurch gekennzeichnet, dass**
das Gehäuse (3) mehrwandig ausgeführt ist.

14. Gehäuse für einen aufblasbaren Gassack nach einem der vorstehend genannten Ansprüche,
**dadurch gekennzeichnet, dass**
das insgesamt einteilig ausgeführte Gehäuse (3) aus einem Kunststoff oder aus einem Metall-Kunststoff-Hybridwerkstoff besteht.

## Claims

1. Housing for an inflatable air bag of a motor vehicle, with a gas generator (1), a housing compartment (2) for stowing the folded air bag, a diffuser (4) made integrally with the housing (3) for uniformly distributing the gas released by the ignited gas generator (1), which gas generator (1) is inserted in the diffuser (4) and has a positive and/or non-positive connection to the diffuser chamber internal wall (5) to secure it in the diffuser (4),
**characterised in that**
the housing (3) has fixing hooks (12) on its bottom face (10) lying opposite the gas outlet end for connecting to a motor vehicle component, and the gas generator (1) has contact surfaces (15) on its bottom face (14) lying opposite the gas outlet end for establishing a direct contact with a motor vehicle component disposed underneath when the gas generator is triggered.

2. Housing for an inflatable air bag as claimed in claim 1,
**characterised in that**
the positive and/or non-positive connection between the gas generator (1) and diffuser chamber internal wall (5) is a press-fit connection.

3. Housing for an inflatable air bag as claimed in claim 1 or 2,
**characterised in that**
the positive and/or non-positive connection between the gas generator (1) and diffuser chamber internal wall (5) is a peripheral flange (6) which is formed once the gas generator has been inserted in the diffuser chamber.

4. Housing for an inflatable air bag as claimed in claim 1 or 2,
**characterised in that**
the positive and/or non-positive connection between the gas generator (1) and diffuser chamber internal wall (5) is a snap-fit connection.

5. Housing for an inflatable air bag as claimed in one of the preceding claims,
**characterised in that**
the diffuser (4) has a diffuser cap (7) provided with outlet orifices (8) for the released gas in the gas outlet direction (A).

6. Housing for an inflatable air bag as claimed in claim 5,
**characterised in that**
the outlet orifices (8) are distributed at uniform distances around the diffuser cap (7).

7. Housing for an inflatable air bag as claimed in one of the preceding claims,
**characterised in that**
retaining elements (9) are provided in the housing compartment (2) for stowing the folded air bag as a means of securing the air bag.

8. Housing for an inflatable air bag as claimed in claim 7,
**characterised in that**
the retaining elements (9) are clamping hooks.

9. Housing for an inflatable air bag as claimed in one of the preceding claims,
**characterised in that**
the housing (3) has mounting orifices (11) on its bottom face (10) lying opposite the gas outlet end.

10. Housing for an inflatable air bag as claimed in claim 1,
**characterised in that**
the motor vehicle component is a steering wheel.

11. Housing for an inflatable air bag as claimed in one of the preceding claims,
**characterised in that**
a compensating and/or seal element (16) is inserted between the gas generator (1) and the diffuser chamber internal wall (5).

12. Housing for an inflatable air bag as claimed in one of the preceding claims,
**characterised in that**
the diffuser (4) and/or the housing (3) is stiffened by reinforcing ribs.

13. Housing for an inflatable air bag as claimed in one of the preceding claims,
**characterised in that**
the housing (3) is of a multi-walled design.

14. Housing for an inflatable air bag as claimed in one of the preceding claims,
**characterised in that**
the housing (3) of an entirely integral design is made from a plastic or a metal-plastic hybrid material.

## Revendications

1. Boîtier pour un coussin gonflable d'un véhicule automobile, avec un générateur de gaz (1), un logement (2) pour le rangement du coussin gonflable plié, un diffuseur (4) réalisé d'un seul tenant avec le boîtier (3) pour la distribution uniforme du gaz libéré par le générateur de gaz (1) allumé, le générateur de gaz (1) étant inséré dans le diffuseur (4) et comportant, pour sa fixation dans le diffuseur (4), une liaison par complémentarité de formes et/ou à force avec la paroi intérieure (5) de la chambre du diffuseur,
**caractérisé en ce que**
le boîtier (3) présente, sur sa face inférieure (10) opposée au côté de sortie du gaz, des crochets de fixation (12) pour la liaison avec un composant du véhicule automobile, et le générateur de gaz (1) présente, sur sa face inférieure (4) opposée au côté de sortie du gaz, des surfaces de contact (15) pour la mise en contact immediate avec un composant du véhicule automobile se trouvant au-dessous, lors du déclenchement du générateur de gaz.

2. Boîtier pour un coussin gonflable selon la revendication 1,
**caractérisé en ce que**
la liaison par complémentarité de formes et/ou à force entre le générateur de gaz (1) et la paroi intérieure (5) de la chambre du diffuseur est un ajustement serti.

3. Boîtier pour un coussin gonflable selon la revendication 1 ou 2,
**caractérisé en ce que**
la liaison par complémentarité de formes et/ou à force entre le générateur de gaz (1) et la paroi intérieure (5) de la chambre du diffuseur est constituée d'une bride de bordure (6) déformée après insertion du générateur de gaz dans la chambre du diffuseur.

4. Boîtier pour un coussin gonflable selon la revendication 1 ou 2 ou 3,
**caractérisé en ce que**
la liaison par complémentarité de formes et/ou à force entre le générateur de gaz (1) et la paroi intérieure (5) de la chambre du diffuseur est constituée d'une liaison clipsée.

5. Boîtier pour un coussin gonflable selon l'une des revendications précédentes,
**caractérisé en ce que**
le diffuseur (4) comporte dans le sens (A) de sortie du gaz, un capuchon de diffuseur (7) avec des orifices d'échappement (8) pour le gaz libéré.

6. Boîtier pour un coussin gonflable selon la revendication 5,
**caractérisé en ce que**
les orifices d'échappement (8) sont répartis à distance régulière sur le capuchon de diffuseur (7).

7. Boîtier pour un coussin gonflable selon l'une des revendications précédentes,
**caractérisé en ce que**
dans le logement (2) de rangement du coussin gonflable plié sont prévus des organes de fixation (9) pour la fixation du coussin gonflable.

8. Boîtier pour un coussin gonflable selon la revendication 7,
**caractérisé en ce que**
les organes de fixation (9) sont des crochets de serrage.

9. Boîtier pour un coussin gonflable selon l'une des revendications précédentes,
**caractérisé en ce que**
le boîtier (3) présente sur sa face inférieure (10) opposée au côté de sortie du gaz, des ouvertures de montage (11).

10. Boîtier pour un coussin gonflable selon la revendication 1,
**caractérisé en ce que**
le composant du véhicule automobile est un volant.

11. Boîtier pour un coussin gonflable selon l'une des revendications précédentes,
**caractérisé en ce que**
un élément de compensation et/ou d'étanchéité (16) est inséré entre le générateur de gaz (1) et la paroi intérieure (5) de la chambre du diffuseur.

12. Boîtier pour un coussin gonflable selon l'une des revendications précédentes,
**caractérisé en ce que**
le diffuseur (4) et/ou le boîtier (3) sont renforcés par des nervures de renfort.

13. Boîtier pour un coussin gonflable selon l'une des revendications précédentes,
**caractérisé en ce que**
le boîtier (3) est réalisé à plusieurs parois.

14. Boîtier pour un coussin gonflable selon l'une des revendications précédentes,
**caractérisé en ce que**
le boîtier (3) réalisé dans son ensemble d'une seule pièce est constitué d'une matière plastique ou d'un matériau hybride de métal et matière plastique.
